(19) **Europäisches Patentamt European Patent Office Office européen des brevets**

(11) **EP 1 364 181 B1**

(12) **FASCICULE DE BREVET EUROPEEN**

(45) Date de publication et mention
de la délivrance du brevet:
**08.08.2012 Bulletin 2012/32**

(51) Int Cl.:
**G01B 9/02** (2006.01)    **G01B 9/04** (2006.01)
**G02B 21/00** (2006.01)

(21) Numéro de dépôt: **01996716.5**

(22) Date de dépôt: **15.11.2001**

(86) Numéro de dépôt international:
**PCT/FR2001/003589**

(87) Numéro de publication internationale:
**WO 2002/040937 (23.05.2002 Gazette 2002/21)**

(54) **PROCEDE ET DISPOSITIF D'IMAGERIE MICROSCOPIQUE INTERFERENTIELLE D'UN OBJET A HAUTE CADENCE.**

VERFAHREN UND EINRICHTUNG ZUR SCHNELLEN INTERFERENZIELLEN MIKROSKOPISCHEN ABBILDUNG EINES OBJEKTS

METHOD AND DEVICE FOR HIGH-SPEED INTERFERENTIAL MICROSCOPIC IMAGING OF AN OBJECT

(84) Etats contractants désignés:
**AT BE CH CY DE DK ES FI FR GB GR IE IT LI LU MC NL PT SE TR**

(30) Priorité: **17.11.2000 FR 0014904**

(43) Date de publication de la demande:
**26.11.2003 Bulletin 2003/48**

(73) Titulaire: **CENTRE NATIONAL DE LA RECHERCHE SCIENTIFIQUE**
**75794 Paris Cedex 16 (FR)**

(72) Inventeurs:
• **DUBOIS, Arnaud**
**F-91940 Les Ulis (FR)**
• **BOCCARA, Claude**
**F-75004 Paris (FR)**

(74) Mandataire: **Giovannini, Francesca et al**
**Osha Liang**
**32, avenue de l'Opéra**
**75002 Paris (FR)**

(56) Documents cités:
**FR-A- 2 664 048    US-A- 5 194 918**

**Description**

La présente invention concerne un procédé et un dispositif d'imagerie microscopique interférentielle d'un objet à haute cadence.

Il est connu que les systèmes interférentiels à division d'amplitude ont une grande importance pratique. Ils mesurent une différence de phase introduite entre deux ondes. L'interféromètre de Michelson est utilisé, par exemple, dans l'industrie, pour mesurer des distances très faibles avec une grande précision. Des distances de l'ordre de 0.1 $\mu$m peuvent ainsi typiquement être mesurées. La modulation de phase est une technique connue (Creath [in Progress in Optics, E. Wolf, ed. Elsevier Science, New-York; 26 (1988) 349] et Schwider [in Progress in Optics, E. Wolf, ed. Elsevier Science, New-York; 28 (1990) 271]). Deux catégories d'interféromètres à modulation de phase existent. On les distingue selon que la phase est modulée de manière continue (interférométrie à intégration de phase) ou de manière discrète (interférométrie à sauts de phase).

Dans l'interférométrie à intégration de phase, la phase est variée de manière continue et on intègre le signal d'interférence au cours de cette variation. Cette variation continue de la phase est, en général, une variation linéaire. Cette technique présente l'avantage d'être plus rapide que celle à sauts de phase. Cependant, elle reste limitée par de possibles dérives du temps d'intégration et par des problèmes d'inertie mécanique.

On connaît, par ailleurs, un autre dispositif basé sur un interféromètre de type Michelson présentant non plus une modulation linéaire de la phase, mais une modulation sinusoïdale. Elle est obtenue en faisant osciller le miroir de référence à l'aide d'une céramique piézoélectrique (Sasaki et al. [Appl. Opt.; 25 (1986) 3137] et [Appl. Opt.; 26 (1987) 1089]. Sur l'autre bras de l'interféromètre est placé l'objet à analyser. Par cette technique, on peut ainsi obtenir des images de phase de l'objet. Cependant, cette technique n'est pas applicable aux microscopes de Mirau et de Michelson où le miroir de référence n'est pas accessible. Elle n'a pas été appliquée au microscope de Linnik.

Une variante a également été proposée avec la mise en oeuvre d'un modulateur de biréfringence photoélastique pour moduler sinusoïdalement la phase et un éclairage stroboscopique pour transposer la fréquence de modulation à une fréquence compatible avec celle de la caméra (Beaurepaire et al. [Optics Lett.; 23 (1998) 244], Dubois et al. [Optics Lett.; 24 (1999) 309] et dispositif de détection analogique multicanal (brevet 2 664 048)). Il nécessite, cependant, l'utilisation de lumière polarisée et la source de lumière doit être modulée à haute cadence (plusieurs kHz).

L'objectif de la présente invention est donc de proposer un procédé et un dispositif d'imagerie microscopique interférentielle, simple dans sa conception et dans son mode opératoire, mettant en oeuvre un interféromètre à deux ondes et une modulation sinusoïdale de la phase.

A cet effet, l'invention concerne un procédé et un dispositif d'imagerie microscopique interférentielle d'un objet suivant les revendications 1 à 11.

L'invention sera décrite plus en détail en référence aux dessins annexés dans lesquels :

- la figure 1 est une représentation schématique du dispositif d'imagerie interférentielle, dans le cadre d'un interféromètre de type Linnik, selon l'invention ;
- la figure 2 est une représentation schématique de l'ensemble d'éléments oscillants, dans le cadre d'un interféromètre de type Linnik, selon l'invention ;
- la figure 3 est une représentation schématique de l'ensemble d'éléments oscillants, dans le cadre d'un interféromètre de type Michelson, selon l'invention ;
- la figure 4 est une représentation schématique de l'ensemble d'éléments oscillants, dans le cadre d'un interféromètre de type Mirau, selon l'invention ;
- la figure 5 est un exemple de démarche pour l'acquisition d'une image de phase, représentant les trois étapes successives 5a), 5b) et 5c).

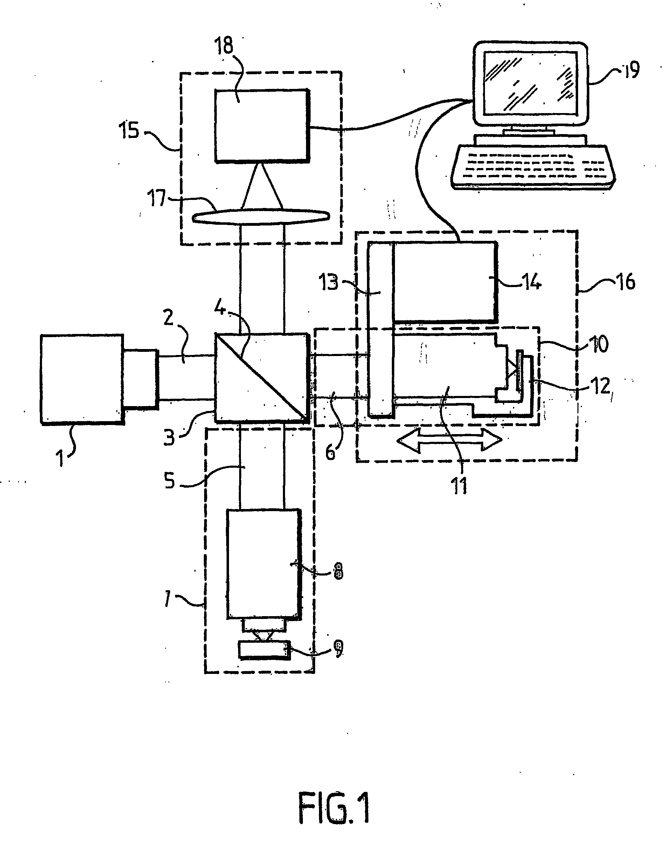

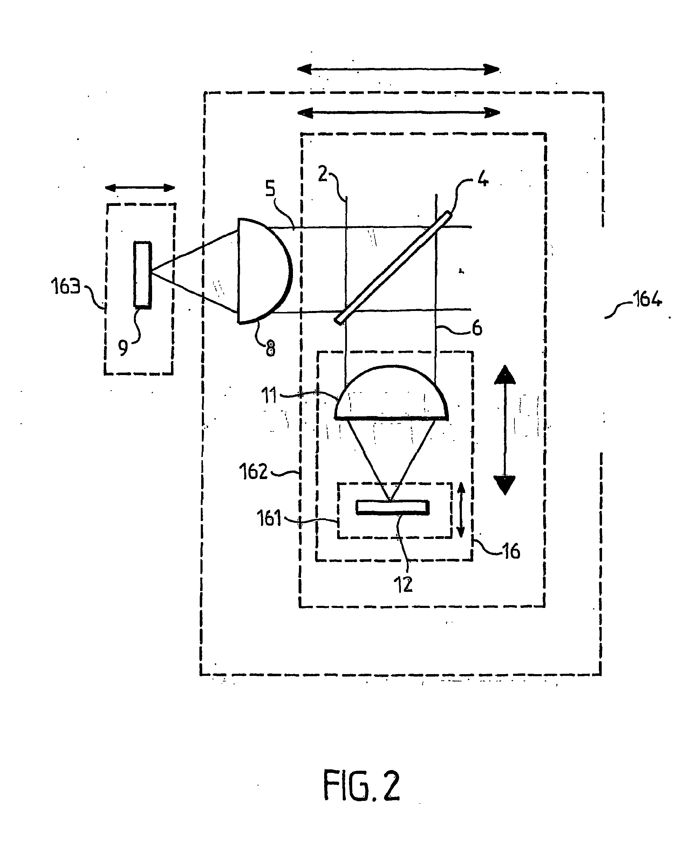

Le procédé et le dispositif d'imagerie microscopique interférentielle d'un objet, selon l'invention, peuvent être appliqués de manière très générale à tout microscope interférentiel à deux ondes. Les figures 1 et 2 sont, par exemple, une représentation schématique du dispositif d'imagerie interférentielle, selon l'invention, dans le cadre d'un interféromètre de type Linnik. Une source 1 produit un signal lumineux porté par un faisceau 2. Contrairement aux dispositifs de l'art antérieur, l'utilisation d'une source d'éclairage stroboscopique n'est pas nécessaire. La lumière n'a pas à être polarisée également. Le faisceau lumineux 2 est envoyé sur un séparateur de faisceau 3 comportant un cube séparateur 4 ou une lame séparatrice semi transparente associée à une lame compensatrice placée à 45° du plan d'incidence du faisceau 2. Elle divise ledit faisceau 2 en deux parties 5 et 6 de même amplitude. Ces faisceaux 5 et 6 sont envoyés chacun sur un des bras de l'interféromètre. Sur un premier bras 7 de l'interféromètre sont positionnés un objectif 8 et un objet 9 à analyser. L'objectif 8 focalise le faisceau 5 sur l'objet 9. Sur un second bras 10 de l'interféromètre sont positionnés un objectif 11 et un miroir de référence 12 sur lequel l'objectif 11 est au point. L'objectif 11 et le miroir 12 sont montés sur une céramique piézoélectrique 13 dont la source d'excitation électrique 14 est synchronisée sur un système de détection multicanal 15. La céramique piézoélectrique 13 représente un oscillateur mécanique. Il déplace un ensemble d'éléments 16 de l'interféromètre comportant, sur la figure 1, l'objectif 11 et le miroir de référence 12. Mais cet ensemble d'éléments oscillants 16 (fig. 2) peut aussi se limiter au seul miroir de référence 12 (ensemble 161), ou comporter l'objectif 11, le miroir de référence 12 et le cube séparateur 3 (ensemble 162). Il peut s'agir également de l'objet à analyser 9 seul (ensemble 163) ou de l'ensemble d'éléments 164 comportant l'objectif de référence 11, le miroir 12, le cube séparateur 3 et l'objectif 8.

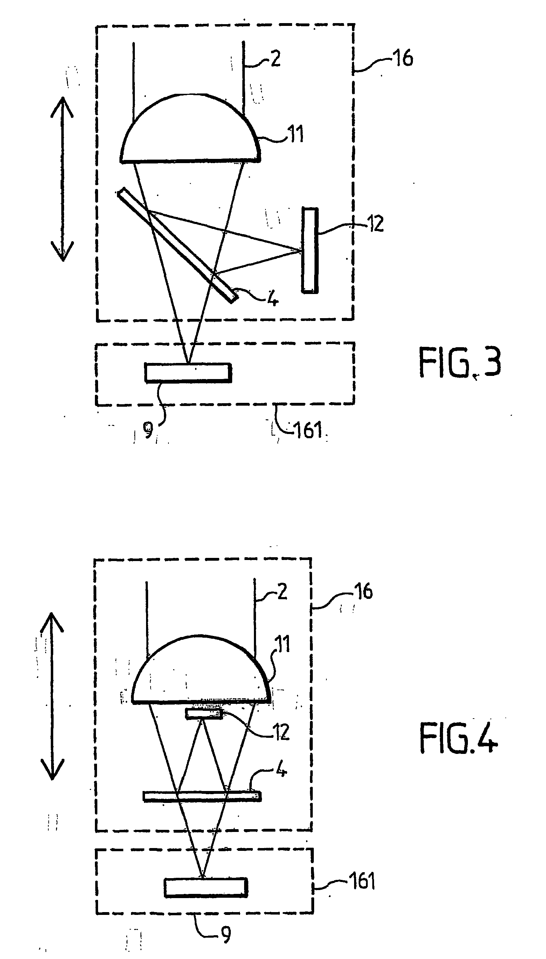

Dans le cas d'un interféromètre de Michelson (fig. 3), cet ensemble d'éléments oscillants 16 comporte l'objectif 11, le miroir de référence 12 et le séparateur de faisceau 3. Cet ensemble est appelé objectif de Michelson. L'ensemble d'éléments oscillants peut aussi se limiter à l'objet à analyser 9 (ensemble 161).

Dans le cas d'un interféromètre de Mirau (fig. 4), cet ensemble d'éléments oscillants 16 est composé de l'objectif de Mirau. On appelle objectif de Mirau, l'ensemble d'éléments constitué de l'objectif 11, du miroir de référence 12 et du séparateur de faisceau 3. L'ensemble d'éléments oscillants peut aussi se limiter à l'objet à analyser 9 (ensemble 161).

Une modulation de phase est donc obtenue en faisant osciller de manière sinusoïdale l'ensemble d'éléments 16. L'amplitude de cette oscillation est réglable. Le signal d'interférence ainsi modulé (de manière périodique mais non sinusoïdale) est intégré continûment pendant des fractions 1/n, n étant entier et supérieur ou égale à 2, de la période de modulation T par le système de détection multicanal 15. Le détecteur multicanal 15 opère à une fréquence f' telle que f'= n f. Le système de détection multicanal 15 comporte un système optique 17 qui focalise les faisceaux sur une caméra CCD 18. Les pixels de la caméra CCD 18 détectent ainsi pour un grand nombre de points du champs le signal après interférence. La caméra CCD 18 est synchronisée sur le signal sinusoïdal commandant l'oscillation mécanique. La phase de cette synchronisation peut être ajustée afin de réduire le bruit dans les images de l'objet. Sa valeur peut être de l'ordre de 1 rad. Un ordinateur 19 permet d'enregistrer par exemple, dans une mémoire tampon, les données obtenues pendant chaque fraction de période 1/n et de calculer, ensuite, l'image de l'objet. La fréquence de production des images dépend de la vitesse de fonctionnement de la caméra 18. Il faut néanmoins que l'ordinateur 19 ait le temps de calculer l'image à partir de la série d'images en mémoire pendant le temps d'acquisition de la série suivante.

On recourt à une source de lumière présentant une faible longueur de cohérence pour obtenir des images tomographiques ou pour éviter la présence d'interférences parasites. Une telle source permet de localiser des franges dans une tranche de l'espace. L'épaisseur de cette tranche est de l'ordre de la demi-longueur de cohérence.

Une source quasi monochromatique permet la visualisation de hauteurs de relief importantes, de l'ordre de la longueur de cohérence. Une telle source quasi monochromatique peut être une source blanche (halogène) devant laquelle est placé un filtre interférentiel.

Le signal d'interférence délivré par des interféromètres à deux ondes, en chaque point du champ, peut s'écrire :

$$I = \bar{I} + A\cos\phi$$

où $\bar{I}$ est l'intensité moyenne, $\phi$ est la phase optique, et A est l'amplitude des franges d'interférences. En faisant osciller un objectif 11 et le miroir de référence 12 (et la séparatrice 3 pour les microscopes de Michelson et Mirau) comme décrit précédemment, on introduit une modulation de phase sinusoïdale d'amplitude $\psi$, de phase de synchronisation $\theta$ et de période $T = 2\pi/\omega$). L'intensité du signal se trouve alors également modulée dans le temps, de manière périodique mais non sinusoïdale:

$$I(t) = \bar{I} + A\cos[\phi + \psi\,\sin(\omega t + \theta)].$$

Dans le dispositif de la Figure 1, la caméra 18 fonctionne à 200 Hz et l'oscillation mécanique 16 à une fréquence de 50 Hz. Il est ainsi possible d'obtenir des séries de quatre images de manière continue.

Le signal I(t) est donc intégré successivement pendant des quarts de la période de modulation T. Ces quatre images s'écrivent mathématiquement:

$$E_p = \int_{(p-1)T/4}^{pT/4} I(t)dt, \qquad p = 1,2,3,4$$

On développe I(t) en série de fonctions de Bessel de première espèce $J_n$ et on combine alors les images de la façon suivante :

$$\Sigma_s = - E1 + E2 + E3 - E4 = (4T/\pi)\, \Gamma_s\, A\, \sin\phi$$

$$\Sigma_c = - E1 + E2 - E3 + E4 = (4T/\pi)\, \Gamma_c\, A\, \cos\phi$$

où

$$\Gamma_s = \Sigma\, (-1)^n\, [J_{2n+1}(\psi)/(2n+1)]\, \sin[(2n+1)\theta]$$

$$\Gamma_c = \Sigma\, [J_{4n+2}(\psi)/(2n+1)]\, \sin[2(2n+1)\theta]$$

Cela permet d'accéder à la phase $\phi$ qui peut être obtenue d'après l'équation:

$$\tan\phi = (\Gamma_c\, /\, \Gamma_s)\, (\Sigma_s\, /\, \Sigma_c)$$

et à l'amplitude A donnée par :

$$A^2 = (\Gamma_c\Sigma_s)^2 + (\Gamma_s\Sigma_c)^2$$

On voit donc que l'acquisition de quatre images permet ainsi de déterminer complètement l'amplitude et la phase de l'onde lumineuse provenant de l'objet. Cependant, ces relations dépendent encore de l'amplitude $\psi$ et de la phase de synchronisation $\theta$ de la modulation sinusoïdale de phase, au travers des paramètres $\Gamma_c$ et $\Gamma_s$. On peut avantageusement ajuster ces paramètres, de sorte que les formules, ci-dessus énoncées, soient simplifiées. Par exemple, l'amplitude de modulation $\psi$ = 2,45 rad et la phase de synchronisation $\theta$ = 0,98 rad permettent cette simplification, on obtient alors:

$$\tan\phi = (\Sigma_s\, /\, \Sigma_c) = (E1 - E2 - E3 + E4)\, /\, (E1 - E2 + E3 - E4)$$

et

$$A^2 = (E1 - E2 - E3 + E4)^2 + (E1 - E2 + E3 - E4)^2$$

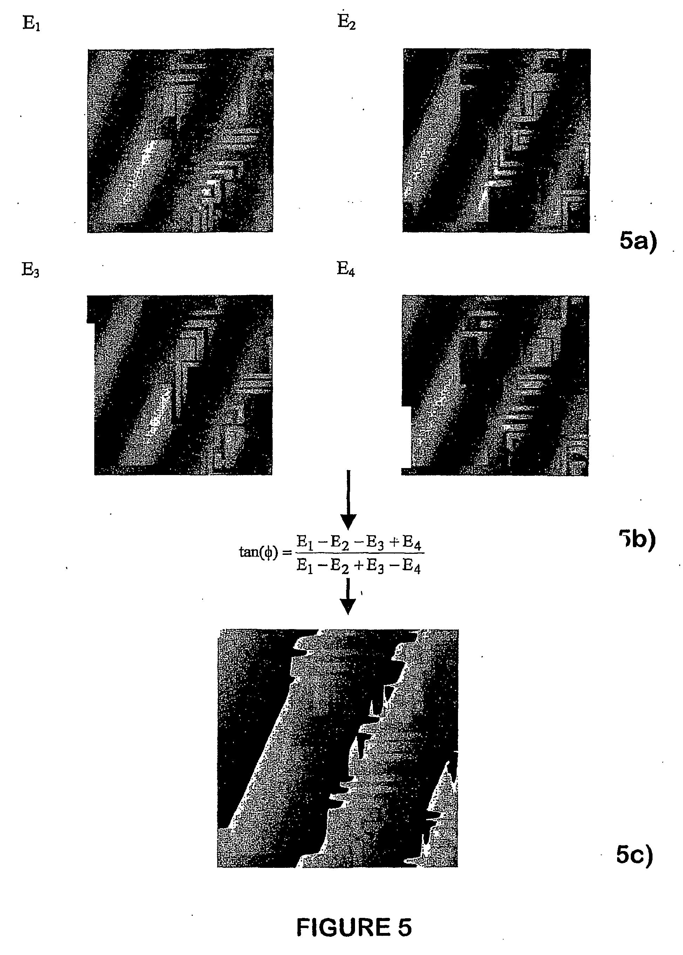

La figure 5 représente un exemple d'acquisition d'une image de phase. Chaque image intermédiaire $E_p$ (p = 1 à 4) a été obtenue successivement pendant des quarts de la période de modulation T (5a). Le calcul de la phase à partir des formules ci-dessus établies est effectué en temps réel (5b). Une image de phase modulo $2\pi$ (ou $\pi$) de l'objet (9) à analyser est produite par l'ordinateur (19) (5c). La phase est ensuite déroulée pour obtenir une image topographique. Le déroulement de phase (phase unwrapping) consiste à ajouter (ou soustraire) un déphasage de $2\pi$ (ou $\pi$) à chaque discontinuité.

Ce procédé et dispositif d'imagerie microscopique interférentielle d'un objet peuvent avantageusement être appliqués à la caractérisation de couches minces et d'interfaces, pour le contrôle de composants en micro-électronique. Ils peuvent également être utilisés dans le cadre de contrôles et inspections à haute cadence; dans la biologie; lors de l'étude d'objets instables dans le temps (par exemple, études in vivo, phénomènes oscillants) ou d'objets dans des environnements instables (par exemple, en présence de vibrations ou de dérives).

## Revendications

1.   Procédé d'imagerie microscopique interférentielle d'un objet (9) dans lequel :

- on envoie un faisceau (2) issu d'une source de lumière (1) à faible longueur de cohérence dans chacun des bras d'un microscope interférentiel à deux ondes, l'un (7) des bras comportant un objet (9) à analyser et l'autre bras (10) comportant un miroir de référence (12),
- on introduit une modulation sinusoïdale de fréquence f, ayant une amplitude ψ et une phase de synchronisation θ, de la différence de phase optique entre les deux bras (6, 7) de l'interféromètre, ladite modulation résultant de l'oscillation mécanique d'un ensemble d'éléments (16) de l'interféromètre,
- on intègre le signal d'interférence (S) au cours de ladite modulation de la différence de phase au moyen d'un détecteur multicanal (15) opérant à une fréquence f' telle que f'=n.f, n étant entier et supérieur ou égal à 2, l'intégration du signal d'interférence (S) étant réalisée pendant des fractions 1/n de période de la modulation, et
- on enregistre les signaux d'interférence intégrés pendant chaque fraction de période 1/n
- on traite numériquement lesdits signaux enregistrés afin de calculer une image tomographique d'une tranche dudit objet, ladite tranche présentant une épaisseur de l'ordre de la moitié de la longueur de cohérence dudit faisceau de lumière.

2. Procédé selon la revendication 1, **caractérisé en ce que** l'amplitude de modulation ψ et la phase de synchronisation θ de l'oscillation mécanique sont ajustables.

3. Procédé selon l'une des revendications 1 ou 2, dans lequel on focalise ladite lumière à faible longueur de cohérence (2) sur l'objet à analyser (9), sur le miroir de référence (12) et sur le détecteur multicanal (15).

4. Dispositif d'imagerie microscopique interférentielle d'un objet (9), comportant :

- une source de lumière (1) qui produit un faisceau (2) lumineux à faible longueur de cohérence,
- un microscope interférentiel à deux ondes, comprenant un séparateur de faisceau (3) destiné à recevoir le faisceau lumineux (2) issu de la source de lumière (1) pour former un premier faisceau lumineux (5) sur un premier bras (7) du microscope interférentiel, ledit premier bras étant adapté pour recevoir un objet (9) à analyser, et un deuxième faisceau lumineux (6) sur un deuxième bras (10) du microscope interférentiel, ledit deuxième bras (10) comportant un miroir de référence (12),
- un oscillateur mécanique (13) pour déplacer un ensemble d'éléments du microscope interférentiel afin d'introduire une modulation de phase sinusoïdale et de fréquence f de la différence de phase optique entre les deux bras du microscope interférentiel ; d'un
- un système optique (8) focalisant ledit premier faisceau lumineux (5), issu du séparateur de faisceau (3) du microscope interférentiel sur l'objet (9) à analyser,
- un détecteur multicanal (15) opérant à une fréquence f' telle que f = n.f, n entier et supérieur ou égal à 2, qui intègre le signal d'interférence (S), pendant des fractions 1/n de période de la modulation, et
- un ordinateur (19) pour enregistrer les signaux d'interférence intégrés obtenus pendant chaque fraction de période 1/n et pour calculer, ensuite, une image tomographique d'une tranche dudit objet, ladite tranche présentant une épaisseur de l'ordre de la moitié de la longueur de cohérence dudit faisceau de lumière.

5. Dispositif selon la revendication 4, **caractérisé en ce que** l'oscillateur mécanique (13) est un système piézoélectrique.

6. Dispositif selon l'une des revendications 4 ou 5, **caractérisé en ce qu'**il comporte également un système optique (17) de focalisation de la lumière sur le détecteur multicanal (15).

7. Dispositif selon l'une des revendications 4 à 6, **caractérisé en ce que** le microscope interférentiel est de type Linnik et l'ensemble d'éléments oscillants (16) est le microscope interférentiel de Linnik, lui-même, composé d'un objectif (11) de focalisation de la lumière (2) sur le miroir de référence (12), du miroir de référence (12) sur lequel l'objectif (11) est au point, du séparateur de faisceau (3), d'un objectif du système optique (8) de focalisation de la lumière (2) sur l'objet à analyser (9) et d'éventuelles lames déphasantes.

8. Dispositif selon l'une des revendications 4 à 6, **caractérisé en ce que** le microscope interférentiel est de type Linnik et le microscope interférentiel l'ensemble d'éléments oscillants (16) est limité au seul miroir de référence (12).

9. Dispositif selon l'une des revendications 4 à 6, **caractérisé en ce que** le microscope interférentiel est de type Mirau et l'ensemble d'éléments oscillants (16) est l'objectif de Mirau lui-même.

10. Dispositif selon l'une des revendications 4 à 6, **caractérisé en ce que** le microscope interférentiel est de type Michelson et l'ensemble d'éléments oscillants (16) est composé de l'objectif, du miroir de référence et du séparateur de faisceau, ensemble appelé objectif de Michelson.

**11.** Dispositif selon l'une des revendications 4 à 6, **caractérisé en ce que** le microscope interférentiel est de type Linnik et l'ensemble d'éléments oscillants (16) est composé du miroir de référence (12) et d'un objectif (11) de focalisation de la lumière (2) sur le miroir de référence (12).

**Claims**

**1.** A method for interferential microscopic imaging of an object (9), wherein:

- a beam (2) coming from a light source (1) with a short coherence length is sent to each of the arms of a two-wave interferential microscope, one (7) of the arms comprising an object (9) to be analysed and the other arm (10) comprising a reference mirror (12),
- a sinusoidal modulation of frequency f, having an amplitude ψ and a synchronisation phase θ, of the optical phase difference is introduced between the two arms (6, 7) of the interferometer, said modulation resulting from the mechanical oscillation of a set of elements (16) of the interferometer,
- the interference signal (S) is integrated during said modulation of the phase difference by means of a multichannel detector (15) operating at a frequency f' such that f' = n.f, n being an integer and greater than or equal to 2, the integration of the interference signal (S) taking place during fractions 1/n of a modulation period and
- the interference signals integrated during each period fraction 1/n are recorded,
- said recoded signals are processed digitally in order to calculate a tomographic image of a slice of said object, said slice having a thickness of the order of half the coherence length of said light beam.

**2.** The method according to claim 1, **characterised in that** modulation amplitude ψ and synchronisation phase θ of the mechanical oscillation are adjustable.

**3.** The method according to any one of claims 1 or 2, wherein said light with a short coherence length (2) is focused on the object to be analysed (9), on the reference mirror (12) and on the multichannel detector (15).

**4.** A device for interferential microscopic imaging of an object (9) comprising:

- a light source (1) which produces a light beam (2) with a short coherence length,
- a two-wave interferential microscope, comprising a beam splitter (3) intended to receive the light beam (2) from the light source (1) so as to form a first light beam (5) on a first arm (7) of the interferential microscope, said first arm being adapted to receive an object (9) to be analysed, and a second light beam (6) on a second arm (10) of the interferential microscope, said second arm (10) comprising a reference mirror (12),
- a mechanical oscillator (13) for displacing a set of elements of the interferential microscope in order to introduce a sinusoidal phase modulation of frequency f of the optical phase difference between the two arms of the interferential microscope.
- an optical system (8) focusing said first light beam (5) coming from the beam splitter (3) of the interferential microscope on the object (9) to be analysed,
- a multichannel detector (15) operating at a frequency f' such that f' = n.f, n being an integer and greater than or equal to 2, which integrates the interference signal (S) during fractions 1/n of a modulation period, and
- a computer (19) for recording the integrated interference signals obtained during each period fraction 1/n and subsequently for calculating a tomographic image of a slice of said object, said slice having the thickness of the order of half the coherence length of said light beam.

**5.** The device according to claim 4, **characterised in that** the mechanical oscillator (13) is a piezoelectric system.

**6.** The device according to any one of claims 4 or 5, **characterised in that** it also comprises an optical system (17) for focusing the light on the multichannel detector (15).

**7.** The device according to any one of claims 4 to 6, **characterised in that** the interferential microscope is of the Linnik type and the set of oscillating elements (16) is the Linnik interferential microscope, itself, comprising a lens (11) for focusing the light (2) on the reference mirror (12), the reference mirror (12) on which the lens (11) is focused, the beam splitter (3), a lens of the optical system (8) for focusing the light (2) on the object to be analysed (9) and any dephasing plates.

8. The device according to any one of claims 4 to 6, **characterised in that** the interferential microscope is of the Linnik type and the set of oscillating elements (16) is limited to the single reference mirror (12).

9. The device according to any one of claims 4 to 6, **characterised in that** the interferential microscope is of the Mirau type and the set of oscillating elements (16) is the Mirau lens itself.

10. The device according to any one of claims 4 to 6, **characterised in that** the interferential microscope is of the Michelson type and the set of oscillating elements (16) comprises the lens, the reference mirror and the beam splitter, an assembly called a Michelson lens.

11. The device according to any one of claims 4 to 6, **characterised in that** the interferential microscope is of the Linnik type and the set of oscillating elements (16) comprises the reference mirror (12) and a lens (11) for focusing the light (2) on the reference mirror (12).


**Patentansprüche**

1. Verfahren zur interferenziellen mikroskopischen Abbildung eines Objekts (9), bei dem:

- ein Strahl (2) aus einer Lichtquelle (1) mit geringer Kohärenzlänge in die jeweiligen Arme eines Interferenzmikroskops mit zwei Wellen gesendet wird, wobei einer (7) der Arme ein zu analysierendes Objekt (9) aufweist und der andere Arm (10) einen Referenzspielgel (12) aufweist,
- eine Sinusmodulation des optischen Phasenunterschieds mit einer Frequenz f, einer Amplitude ψ und einer Synchronisationsphase θ zwischen den beiden Armen (6,7) des Interferometers eingebracht wird, wobei die Modulation sich aus der mechanischen Oszillation einer Gesamtheit von Elementen (16) des Interferometers ergibt,
- das Interferenzsignal (S) während der Modulation des Phasenunterschieds mittels eines Multikanaldetektors (15) integriert wird, der mit einer Frequenz f' arbeitet, wobei f' = n.f, wobei n eine Ganzzahl ist und größer oder gleich 2 ist, wobei die Integration des Interferenzsignals (S) während Bruchteile 1/n der Modulationsperiode erfolgt, und
- die integrierten Interferenzsignale während jedes Periodenbruchteils 1/n aufgezeichnet werden,
- die aufgezeichneten Signale digital verarbeitet werden, um ein tomographisches Bild einer Scheibe des Objektes zu berechnen, wobei die Scheibe eine Dicke in der Größenordnung der Hälfte der Kohärenzlänge des Lichtstrahls aufweist.

2. Verfahren nach Anspruch 1, **dadurch gekennzeichnet, dass** die Modulationsamplitude ψ und die Synchronisationsphase θ der mechanischen Oszillation anpassbar sind.

3. Verfahren nach einem der Ansprüche 1 oder 2, bei dem das Licht mit geringer Kohärenzlänge (2) auf das zu analysierende Objekt (9), auf den Referenzspiegel (12) und auf den Multikanaldetektor (15) fokussiert wird.

4. Vorrichtung zur interferenziellen mikroskopischen Abbildung eines Objekts (9) mit:

- einer Lichtquelle (1), die einen Lichtstrahl (2) mit geringer Kohärenzlänge erzeugt,
- einem Interferenzmikroskop mit zwei Wellen, welches einen Strahlenteiler (3) aufweist, der dazu bestimmt ist, den Lichtstrahl (2) aus der Lichtquelle (1) zu empfangen, um einen ersten Lichtstrahl (5) auf einem ersten Arm (7) des Interferenzmikroskops zu bilden, wobei der erste Arm geeignet ist, um ein zu analysierendes Objekt (9) aufzunehmen, und einen zweiten Lichtstrahl (6) auf einem zweiten Arm (10) des Interferenzmikroskops zu bilden, wobei der zweite Arm (10) einen Referenzspiegel (12) aufweist,
- einem mechanischen Oszillator (13), um eine Gesamtheit von Elementen des Interferenzmikroskops zu verschieben, um eine Sinus-Phasenmodulation mit einer Frequenz f und des optischen Phasenunterschieds zwischen den beiden Armen des Interferenzmikroskops einzubringen,
- einem optischen System (8), welches den ersten Strahl (5) aus dem Strahlenteiler (3) des Interferenzmikroskops auf das zu analysierende Objekt (9) fokussiert,
- einem Multikanaldetektor (15), der mit einer Frequenz f' arbeitet, wobei f' = n.f, wobei n eine Ganzzahl ist und größer oder gleich 2 ist, und der das Interferenzsignal (S) während Bruchteile 1/n der Modulationsperiode integriert, und

- einem Rechner (19), um die während jedes Periodenbruchteils 1/n erhaltenen integrierten Interferenzsignale aufzuzeichnen und um anschließend ein tomographisches Bild einer Scheibe des Objektes zu berechnen, wobei die Scheibe eine Dicke in der Größenordnung der Hälfte der Kohärenzlänge des Lichtstrahls aufweist.

5. Vorrichtung nach Anspruch 4, **dadurch gekennzeichnet, dass** es sich bei dem mechanischen Oszillator (13) um ein piezoelektrisches System handelt.

6. Vorrichtung nach einem der Ansprüche 4 oder 5, **dadurch gekennzeichnet, dass** sie ferner ein optisches System (17) zur Fokussierung des Lichts auf den Multikanaldetektor (15) aufweist.

7. Vorrichtung nach einem der Ansprüche 4 bis 6, **dadurch gekennzeichnet, dass** das Interferenzmikroskop vom Linnik-Typ ist und die Gesamtheit der oszillierenden Elemente (16) das Linnik-Interferenzmikroskop selbst ist, das aus einem Objektiv (11) zur Fokussierung des Lichts (2) auf den Referenzspiegel (12), aus dem Referenzspiegel (12), auf den das Objektiv (11) scharf gestellt ist, aus dem Strahlenteiler (3), aus einem Objektiv des optischen Systems (8) zur Fokussierung des Lichts (2) auf das zu analysierende Objekt (9) und aus eventuellen Phasenverschiebungsplättchen besteht.

8. Vorrichtung nach einem der Ansprüche 4 bis 6, **dadurch gekennzeichnet, dass** das Interferenzmikroskop vom Linnik-Typ ist und die Gesamtheit der oszillierenden Elemente (16) auf den alleinigen Referenzspiegel (12) beschränkt ist.

9. Vorrichtung nach einem der Ansprüche 4 bis 6, **dadurch gekennzeichnet, dass** das Interferenzmikroskop vom Mirau-Typ ist und die Gesamtheit der oszillierenden Elemente (16) das Mirau-Objektiv selbst ist.

10. Vorrichtung nach einem der Ansprüche 4 bis 6, **dadurch gekennzeichnet, dass** das Interferenzmikroskop vom Michelson-Typ ist und die Gesamtheit der oszillierenden Elemente (16) aus dem Objektiv, dem Referenzspiegel und dem Strahlenteiler besteht, wobei diese Gesamtheit als Michelson-Objektiv bezeichnet wird.

11. Vorrichtung nach einem der Ansprüche 4 bis 6, **dadurch gekennzeichnet, dass** das Interferenzmikroskop vom Linnik-Typ ist und die Gesamtheit der oszillierenden Elemente (16) aus dem Referenzspiegel (12) und aus einem Objektiv (11) zur Fokussierung des Lichts (2) auf den Referenzspiegel (12) besteht.

FIG.1

FIG. 2

FIG.3

FIG.4

$E_1$

$E_2$

5a)

$E_3$

$E_4$

5b)

$$\tan(\phi) = \frac{E_1 - E_2 - E_3 + E_4}{E_1 - E_2 + E_3 - E_4}$$

5c)

FIGURE 5

## RÉFÉRENCES CITÉES DANS LA DESCRIPTION

**Documents brevets cités dans la description**

- WO 2664048 A

**Littérature non-brevet citée dans la description**

- **Creath.** Progress in Optics. Elsevier Science, 1988, vol. 26, 349
- **Schwider.** Progress in Optics. Elsevier Science, 1990, vol. 28, 271
- **Sasaki et al.** *Appl. Opt.,* 1986, vol. 25, 3137
- *Appl. Opt.,* 1987, vol. 26, 1089
- **Beaurepaire et al.** *Optics Lett.,* 1998, vol. 23, 244
- **Dubois et al.** *Optics Lett.,* 1999, vol. 24, 309